# EUROPÄISCHE PATENTSCHRIFT

(11) **EP 1 084 649 B1**
(45) Veröffentlichungstag und Bekanntmachung des Hinweises auf die Patenterteilung: **16.03.2005**
(21) Anmeldenummer: 00810768.2
(22) Anmeldetag: 28.08.2000
(51) Int. Cl.: A46B 13/00, A61C 3/06

(54) **Bürste für die Anwendung in der Zahnrestauration**
Brush for use in dental restoration
Brosse pour l'utilisation dans la restauration dentaire

(30) Priorität: 20.09.1999 CH 172699
(43) Veröffentlichungstag der Anmeldung: 21.03.2001
(73) Patentinhaber: KerrHawe SA, 6934 Bioggio (CH)
(72) Erfinder: Aschmann, Felix, 6939 Arosio (CH); von Weissenfluh, Beat A., 6925 Gentilino (CH)
(74) Vertreter: Störzbach, Michael Andreas

(56) Entgegenhaltungen:
- FR-A- 2 439 066
- US-A- 2 311 135
- US-A- 2 984 053
- US-A- 5 187 904
- US-A- 5 588 172

## Beschreibung

Die vorliegende Erfindung bezieht sich auf eine Bürste gemäss Oberbegriff des Anspruchs 1.

In der restaurativen Zahnheilkunde ist es üblich, dass nach dem Legen einer Füllung diese über mehrere Stufen in die gewünschte Form und Oberflächenbeschaffenheit gebracht wird, angefangen mit der groben Ausarbeitung der anatomischen Form mit Diamantschleifern bis hin zum Polieren der Füllungsoberfläche. Dieses Vorgehen ist mit vielen Instrumentenwechseln verbunden, da von der groben Formgebung bis hin zum Polieren die Verwendung von Instrumenten unterschiedlicher Körnung notwendig ist.

Ein weiteres Problem ist die Tatsache, dass die Oberfläche der Zähne komplexe Formen aufweisen und sich die üblichen Polierer nur schlecht an die zerklüfteten Oberflächen anpassen, so dass das Instrument sorgfältig geführt werden muss, um alle zu polierenden Stellen zu erreichen.

Eine wichtige Verbesserung in dieser Hinsicht konnte durch die Verwendung von Bürsten, deren Borsten mit Abrasivpartikeln geladen sind, erreicht werden. Mit diesen Bürsten ist es möglich, die Füllung direkt nach der groben Formgebung mit Diamantschleifern in einem Schritt zu polieren. Zudem können auch sehr kantige und verwinkelte Strukturen ohne spezielle Instrumentenführung erreicht werden.

Diese Bürsten weisen aber eine Reihe von ernsten Nachteilen auf, die hauptsächlich darauf zurückzuführen sind, dass die Borsten, bedingt durch die Abrasivpartikel, relativ dick sind:
1. Sie sind steif und sperrig.
2. Sie haben den Charakter einer technischen Bürste und provozieren somit Hemmungen für die orale Anwendung.
3. Sie sind sehr traumatisch für das Zahnfleisch (Steifigkeit).
4. Sie adaptieren sich nur bei Anwendung erheblichen Drucks an die Zahnoberfläche.
5. Bedingt durch die dicken Borsten lassen sie sich nicht in beliebigen Formen herstellen.
6. Die dicken Borsten federn kaum und brechen unter starker Belastung ab.
7. Sie bereiten aus hygienischer Sicht Mühe: Sie sind für Einmalgebrauch zu teuer, können jedoch wohl sterilisiert, aber nicht gereinigt werden.

Aehnliche Anforderungen bestehen auch bei der Herstellung von Zahnprothesen, wie Kronen, Inlays, Brücken usw., d. h. im Arbeitsgebiet des Zahntechnikers. Die obigen Erläuterungen gelten daher auch für die Schleifwerkzeuge in diesem Bereich.

Eine Art Schleifkörper mit flächigen Abrasivelementen ist aus der US-5,187,904 bekannt. Sie bestehen aus einem Träger, an dem Blätter aus einem nicht-elastomeren Kunststoff befestigt sind, - in die Abrasivgranulat eingebettet ist. Die Blätter sind steif, so dass auch bei relativ grosser Länge frei ausladend kaum Durchbiegung unter dem Eigengewicht auftritt. Bei Benutzung treten daher hauptsächlich die Kanten der Abrasivelemente in Kontakt mit dem Werkstück.

Abgesehen davon, dass diese Schleifkörper nicht für die Benützung im Dentalbereich angegeben sind, sondern für allgemeine Schleif- und Polierarbeiten, stellen hier die Kanten vorrangig die aktiven Zonen dar, und die Steifheit der Blätter, die ausdrücklich angestrebt wird, verhindert das Bearbeiten extrem feiner Oberflächendetails, wie es in der Dentaltechnik nötig ist.

Eine Aufgabe der vorliegenden Erfindung besteht daher darin, eine Bürste für die Anwendung in der Zahnmedizin, insbesondere für die Zahnrestauration, anzugeben, die mindestens hinsichtlich einem der oben genannten Problempunkte eine Verbesserung darstellt.

Eine derartige Bürste ist im Anspruch 1 angegeben. Die weiteren Ansprüche geben bevorzugte Ausführungsformen der Bürste an.

Die Lösung der Aufgabe besteht darin, einen Weg zu finden, flexiblere und doch abrasive Borsten herzustellen. Gemäss der Erfindung erhält man diese, indem man mit Abrasivstoffen beschichtete Folien an den Kanten in geeigneten Abständen bis zu einer gewünschten Tiefe einschneidet, so dass eine Reihe von lamettaartigen Streifen entstehen, die an einem Ende miteinander verbunden sind.

Die Erfindung soll weiter an einem Ausführungsbeispiel unter Bezugnahme auf Figuren erläutert werden.
Figur 1 zeigt eine Seitenansicht einer erfindungsgemässen Bürste;
Figur 2 zeigt einen Abrasivstreifen in vergrösserter Darstellung; und
Figuren 3 und 4 zeigen Aufsichten auf zwei Varianten der Bürste.
Figuren 5 und 6 zeigen schematisch ein zweites Ausführungsbeispiel im Längsschnitt bzw. in der Ansicht von oben.

Die Bürste 1 besteht im wesentlichen aus einem Halter 3, auf dessen Kopf 5 die Abrasivstreifen 7 angebracht sind. Der Halter 3 entspricht ansonsten den marktgängigen Bürsten: Neben dem Kopf 5 weist er einen Schaft 9 auf, der an seinem Kopfende einen Adapter 10 zum Anschluss an einen üblichen Antrieb der Dentaltechnik aufweist.

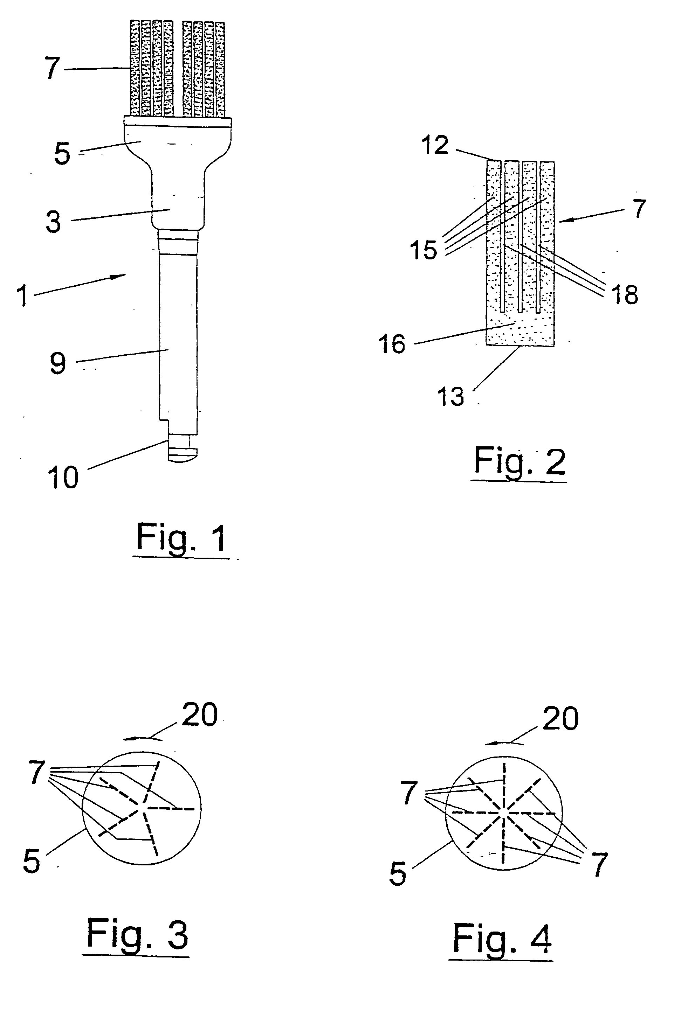

Der Abrasivstreifen 7 ist in Figur 2 vergrössert dargestellt. Er besteht aus einem folienförmigen Träger, der mit den als Punkten angedeuteten Abrasivstoffpartikeln beschichtet ist. Der Träger kann aus einer grossen Zahl Materialien bestehen wie Metall, Kunststoff,Papier. Die Beschichtung mit Abrasivstoff kann ein- oder zweiseitig sein. Der Abrasivstreifen 7 ist von einer seiner Schmalseiten 12 her in regelmässigen Abschnitten nahezu bis zur zweiten Schmalseite 13 eingeschnitten. Es ergeben sich dadurch die ebenfalls streifenförmigen Borsten 15, die am Ende 16, d. h. der Schmalseite 13, miteinander verbunden sind. Insoweit ähnelt der Abrasivstreifen 7 einem Lamettastreifen. Die Anzahl der Einschnitte 18 kann in weiten Grenzen variieren, z. B. können 1 bis 20 Einschnitte vorhanden sein, denkbar ist aber auch eine grössere Anzahl. Die Einschnitte 18 müssen auch nicht unbedingt in gleichmässigen Abständen angeordnet sein, auch wenn eine Anordnung mit konstantem Abstand naheliegt.

Für die Bürste wird eine Anzahl Abrasivstreifen 7 stehend am Kopf 5 befestigt. Z. B. kann das Verbindungsende 16 im Kopf 5 eingeklemmt oder im Falle eines Kunststoffkopfes auch durch Spritzgiessen befestigt sein.

Die Figuren 3 und 4 zeigen zwei verschiedene, beispielhafte Anordnungen mit 5 bzw. 8 Abrasivstreifen 7 im Kopf 5.

Pfeil 20 deutet darin die Richtung der Drehbewegung an, für die das Werkzeug vorgesehen ist. Die Abrasivstreifen würden dann bevorzugt in etwa quer zur Bewegung ausgerichtet. Durch die im wesentlichen radiale Anordnung der Abrasivstreifen zeigen die Borsten in Richtung der Zentrifugalkraft eine relativ hohe Steifigkeit, so dass auch bei hohen Drehzahlen ein Verbiegen nach aussen unterdrückt wird und die Bürste ihre vorgegebene Kontur beibehält.

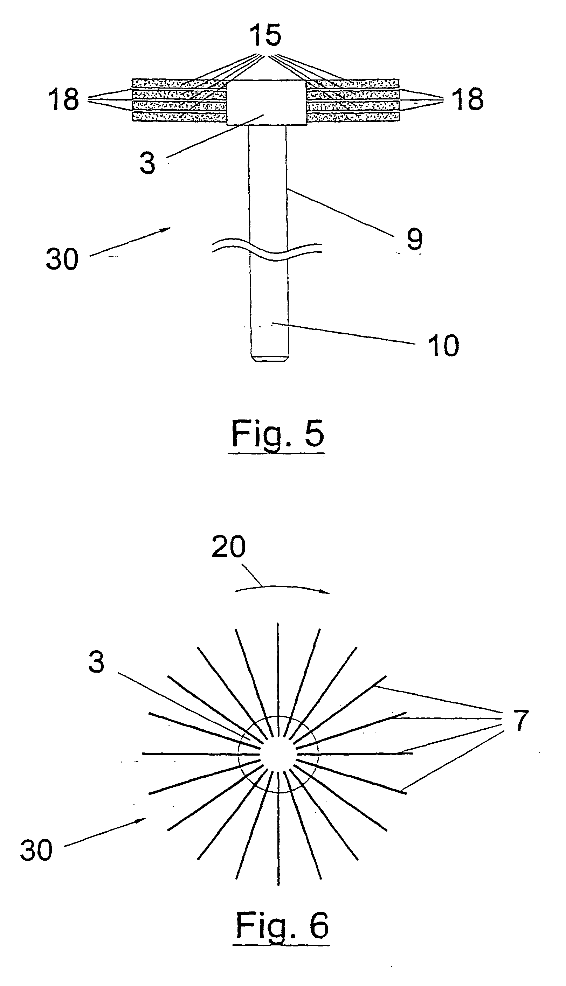

Die beschriebene Ausführungsform ist so vom Zahnarzt zur Bearbeitung von Füllungen wie auch vom Zahntechniker einsetzbar. Eine zweite, insbesondere für letzteren bestimmte Ausführung zeigen die Figg. 5 und 6.

Bei dieser Bürste 30 sind die Abrasivstreifen 7 so angeordnet, dass die Einschnitte 18 und damit die Borstenstreifen 15 radial nach aussen ausgerichtet sind. Die übrigen Merkmale entsprechen den oben beschriebenen und tragen diesselben Bezugszeichen.

Durch die Realisierung der Borsten in Form von dünnen Streifen, die gegenüber konventionellen Borsten mit z. B. in etwa rundem Querschnitt in die Richtung tangential zur Rotation der Bürste deutlich leichter biegbar sind, passt sich die erfindungsgemässe Bürste bereits unter gelindem Druck auch an komplizierte Formen an. Die Abrasivstreifen 7 sind preiswert herstellbar und können z. B. durch Zuschneiden mit einer nahezu beliebigen Kontur versehen werden.

Aus der Beschreibung sind dem Fachmann eine Vielzahl Abwandlungen der erfindungsgemässen Bürste zugänglich, ohne den Schutzbereich zu verlassen. Denkbar ist z. B., die Abrasivstreifen nicht exakt radial auszurichten, sondern nur näherungsweise. Eine solche Anordnung wäre die eines Kreuzes, bei dem jeder Arm aus zwei oder mehr parallel angeordneten Abrasivstreifen zusammengesetzt ist. Denkbar ist auch eine z. B. gewellte Form anstatt der dargestellten, ebenen Form der Abrasivstreifen. Neben der üblichen drehenden Arbeitsbewegung ist auch eine lineare Bewegung vorstellbar, z. B. Hin- und Herbewegung. Als Abrasivmaterial kann jedes in Betracht gezogen werden, mit dem geeignete, blattförmige Träger beschichtbar sind und die ansonsten die aus der Dentaltechnik gegebenen Anforderungen erfüllen.

## Patentansprüche

1. Zahnrestaurationsbürste (1;30) zur Bearbeitung von Oberflächen, insbesondere von Füllungen unter Drehbewegung **dadurch gekennzeichnet, dass** sie mindestens ein im wesentlichen blatt-und folienförmiges Abrasivelement (7) aufweist, das am Kopf (5) eines Halters (3) befestigt ist und mindestens einen Einschnitt (18) aufweist, um das Abrasivelement in mindestens zwei im wesentlichen unabhängig voneinander biegbare Borstenelemente (15) zu zerteilen, um die flexibilität der Abrasivelemente zu erhöhen.

2. Bürste (1; 30) gemäss Anspruch 1, **dadurch gekennzeichnet, dass** die Abrasivelemente (7) im Kopf (5) durch Kleben, Klemmen und/oder, insbesondere im Falle eines Kopfes aus Kunststoff, durch Spritzgiessen befestigt sind.

3. Bürste (1; 30) gemäss einem der Ansprüche 1 bis 2 , **dadurch gekennzeichnet, dass** das Abrasivelement (7) eine im wesentlichen rechteckige Kontur aufweist und bevorzugt mit einer der Seiten im Kopf (5) befestigt ist.

4. Bürste (1) gemäss einem der Ansprüche 1 bis 3, **dadurch gekennzeichnet, dass** die Mehrzahl und bevorzugt alle Einschnitte mindestens eines Abrasivelements (7), bevorzugt aller Abrasivelemente (7), im wesentlichen parallel zur vorgesehenen Drehachse der Bürste (1) gerichtet sind.

5. Bürste (30) gemäss einem der Ansprüche 1 bis 3, **dadurch gekennzeichnet, dass** die Mehrzahl und bevorzugt alle Einschnitte mindestens eines Abrasivelements (7), bevorzugt aller Abrasivelemente (7), im wesentlichen senkrecht zur vorgesehenen Drehachse der Bürste (30) gerichtet sind.

6. Bürste (1; 30) gemäss einem der Ansprüche 1 bis 5, **dadurch gekennzeichnet, dass** die Abrasivelemente (7) aus Metall, Kunststoff und/oder Papier bestehen, die mit Abrasivmaterialpartikeln ein- oder zweiseitig beschichtet sind, wobei bevorzugt die Mehrzahl und insbesondere bevorzugt sämtliche Abrasivelemente (7) der Bürste aus dem gleichen Material bestehen.

7. Bürste (1; 30) gemäss einem der Ansprüche 1 bis 6, **dadurch gekennzeichnet, dass** die Mehrzahl, bevorzugt alle, Borstenelemente (15) im wesentlichen quer zur Richtung (20) der Arbeitsbewegung, für die die Bürste ausgelegt ist, angeordnet sind, so dass die Borstenelemente (15) in dieser Richtung (20) mit geringerem Kraftaufwand biegbar sind.

## Claims

1. Dental restoration brush (1; 30) for the treatment of surfaces, more particularly of fillings, by rotational movement, **characterised in that** it comprises at least one essentially lamellar and foil-shaped abrasive element (7) attached to the head (5) of a holder (3) and having at least one incision (18) for dividing the abrasive element into at least two bristle portions (15) that are bendable essentially independently from each other in order to increase the flexibility of the abrasive elements.

2. Brush (1; 30) according to claim 1, **characterised in that** the abrasive elements (7) are fastened in the head (5) by glueing, clamping, and/or by injection-molding, particularly in the case of a head made of synthetic material.

3. Brush (1; 30) according to one of claims 1 to 2, **characterised in that** the abrasive element (7) has an essentially rectangular contour and is preferably fastened in the head (5) by one of its sides.

4. Brush (1) according to one of claims 1 to 3, **characterised in that** the majority and preferably all of the incisions of at least one abrasive element (7), preferably of all abrasive elements (7), are essentially parallel to the intended rotational axis of the brush (1).

5. Brush (30) according to one of claims 1 to 3, **characterised in that** the majority and preferably all of the incisions of at least one abrasive element (7), preferably of all abrasive elements (7), are essentially perpendicular to the intended rotational axis of the brush (30).

6. Brush (1; 30) according to one of claims 1 to 5, **characterised in that** the abrasive elements (7) are made of metal, of a synthetic material, and/or of paper and are coated on one or on two sides with particles of an abrasive material, wherein preferably the majority, and more preferably all of the abrasive elements (7) of the brush are made of the same material.

7. Brush (1; 30) according to one of claims 1 to 6, **characterised in that** the majority and preferably all of the bristle portions (15) are arranged essentially transversely to the direction (20) of the working movement for which the brush is designed, thereby reducing the force required to bend the bristle portions (15) **in that** direction (20).

## Revendications

1. Brosse pour restaurations dentaires (1; 30) pour le traitement de surfaces, plus particulièrement d'obturations, par un mouvement rotatif, **caractérisée en ce qu'**elle comporte au moins un élément abrasif (7) en forme de feuille et de bande, lequel est fixé à la tête (5) d'un support (3) et présente au moins une entaille (18) afin de diviser ledit élément abrasif en au moins deux éléments de soie (15) qui sont pliables essentiellement indépendamment l'un de l'autre afin d'augmenter la flexibilité des éléments abrasifs.

2. Brosse (1; 30) selon la revendication 1, **caractérisée en ce que** les éléments abrasifs (7) dans la tête (5) sont fixés par collage, serrage et/ou, particulièrement dans le cas d'une tête en matière plastique, par moulage par injection.

3. Brosse (1; 30) selon l'une des revendications 1 à 2, **caractérisée en ce que** l'élément abrasif (7) présente un profil essentiellement rectangulaire et est préférablement fixé dans la tête (5) à l'un de ses côtés.

4. Brosse (1) selon l'une des revendications 1 à 3, **caractérisée en ce que** la plupart et préférablement toutes les entailles d'au moins un élément abrasif (7), préférablement de tous les éléments abrasifs (7), sont essentiellement parallèles à l'axe de rotation prévu de la brosse (1).

5. Brosse (30) selon l'une des revendications 1 à 3, **caractérisée en ce que** la plupart et préférablement toutes les entailles d'au moins un élément abrasif (7), préférablement de tous les éléments abrasifs (7), sont essentiellement perpendiculaires à l'axe de rotation prévu de la brosse (30).

6. Brosse (1; 30) selon l'une des revendications 1 à 5, **caractérisée en ce que** les éléments abrasifs (7) sont en métal, en matière synthétique et/ou en papier et revêtus d'un côté ou des deux côtés de particules abrasives où préférablement la plupart et plus préférablement tous les éléments abrasifs (7) de la brosse sont constitués du même matériau.

7. Brosse (1; 30) selon l'une des revendications 1 à 6, **caractérisée en ce que** la plupart, préférablement tous les éléments de soie (15) sont disposés essentiellement transversalement à la direction (20) du mouvement de travail pour lequel la brosse est conçue, de sorte que les éléments de soie (15) sont pliables par une force plus faible dans cette direction (20).
